(19) Europäisches Patentamt / European Patent Office / Office européen des brevets

(11) **EP 2 651 101 B1**

(12) **EUROPEAN PATENT SPECIFICATION**

(45) Date of publication and mention
of the grant of the patent:
**12.11.2014 Bulletin 2014/46**

(51) Int Cl.:
*H04L 29/08* (2006.01)   *G06F 9/50* (2006.01)

(21) Application number: **12305442.1**

(22) Date of filing: **13.04.2012**

(54) **Method for mapping media components based on link and/or processing cost**

Verfahren zum Mapping von Medienkomponenten basierend auf den Verknüpfungs- und/oder Verarbeitungskosten

Procédé de mappage de composants de média sur la base de liaison et/ou coût de traitement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2013 Bulletin 2013/42**

(73) Proprietor: **ALCATEL LUCENT
92100 Boulogne-Billancourt (FR)**

(72) Inventors:
• **Satzke, Klaus
71732 Tamm (DE)**
• **Wahl, Stefan
71701 Schwieberdingen (DE)**

(74) Representative: **Wetzel, Emmanuelle
Alcatel Lucent
Intellectual Property & Standards
70430 Stuttgart (DE)**

(56) References cited:
**US-A1- 2004 083 475**

• **GUILHERME KOSLOVSKI ET AL: "Locating Virtual Infrastructures: Users and InP perspectives", INTEGRATED NETWORK MANAGEMENT (IM), 2011 IFIP/IEEE INTERNATIONAL SYMPOSIUM ON, IEEE, 23 May 2011 (2011-05-23), pages 153-160, XP032035474, DOI: 10.1109/INM.2011.5990686 ISBN: 978-1-4244-9219-0**

**Description**

The present document relates to cloud computing. In particular, the present document relates to methods and systems for cloud computing which enable the efficient and flexible placement of application components within a cloud.

The Internet is changing the way how users consume media. Enabled by Internet technologies, the evolution is quickly moving towards a point allowing users to enjoy media services like live 3D broadcasting, time-shifted viewing of live events or video on demand whenever wanted, wherever needed and on any preferred device. Even more, in the Internet, the user will not only be a spectator but an immersed participant. Web based services are the catalyst for a whole class of new personalized media centric applications, like massive sharing of multimedia content in real-time or immersive multimedia communication. These services will not be realized as a pure content stream, but as an orchestrated flow of media processing functions that will provide the requested data at the appropriate time, location and format. With the introduction of high definition video formats, the transferred data volume will outrun the size of the code building in the data transformation process. Therefore placing service components in an intelligent way on a distributed service infrastructure will provide a way to increase the scaling of the future Internet infrastructure. In other words, as the transferred data volumes increase, it may become more efficient to transfer and place SW components of a distributed application at appropriate positions within a cloud network.

Document US 2004/0083475 (published on 29/04/2004) describes a method for distributing operations in a software application from a master computer to one or more slave computers for execution.

The present document addresses the technical problem of providing a cloud of computing devices (also referred to as nodes) which enable the efficient and flexible placement of service / application components. In particular, the present document addresses the technical problem of providing an efficient scheme of placing application components within the cloud of computing devices.

A first computing device and a method according to the present invention are defined respectively in claim 1 and claim 15, with various embodiments as indicated in dependent claims 2-14.

According to an aspect a first computing device (also referred to as a computing node or node) adapted for distributed cloud computing is described. The first computing device may be adapted to host a first component of an application. In other words, the first computing device may be adapted to execute the first component of an application. The first component may send data according to (or at) a first load via a first communication link to a second component of the application, wherein the second component is hosted on a second computing device (which is remote to the first computing device). In other words, the second component may receive data from the first component, thereby generating a first load on the first communication link.

The first computing device may be adapted to receive a component placement request for a third component of the application. The third component may e.g. be an enhancement of the application. By way of example, the application may be a video conferencing application and the first component may comprise a video encoder / decoder and the second component may comprise a conference mixer function. The third component may process the encoded bitstream from the first component, e.g. to generate additional metadata or to perform a transcoding of the encoded bitstream. As such, the third component may receive data from the first component according to an ingress load and the third component may send data to the second component according to an egress load.

The computing device may comprise a local resource list. The local resource list may comprise information indicative of link load cost functions on the first communication link and on at least one neighbour communication link to at least one neighbour computing device positioned in a neighbourhood of the first computing device. The neighbourhood of the first computing device may be defined by one or more neighbourhood conditions which need to be met by the at least one neighbour computing device. The one or more neighbourhood conditions may comprise a maximum round trip time between the first computing device and the at least one neighbour computing device. Alternatively or in addition, the one or more neighbourhood conditions may comprise the condition that the at least one neighbour computing device is positioned within a same topological area as the first computing device. The link load cost functions may be indicative of a cost of transmission resources on a link as a function of the link utilization. In particular, the link load cost functions may be convex functions comprising a linear region for link utilization below a link utilization threshold and a nonlinear region for link utilization above the utilization threshold.

The first computing device may be adapted to determine whether to place the third component on the first computing device or whether to forward the component placement request to the second computing device or to the at least one neighbour computing device. For this purpose, the first computing device may take into account the first load, the ingress load, the egress load and/or the link load cost function on the first communication link and/or the link cost function on the at least one neighbour communication link. In particular, the first computing device may be adapted to determine a first cost of the first communication link subject to the first load. In other words, the first computing device may determine the link cost caused by the data transmitted from the first to the second component. Furthermore, the first computing device may be adapted to determine a second cost of the first communication link subject to the egress load. In other words, the first computing device may be adapted to determine the link cost caused by the data transmitted from the third component to the second component. If it is determined that the second cost is smaller than or equal to the first cost, the first computing device may be adapted to place the third component on the first computing device. As a result, the transmission cost between the first computing device and the second computing device (with regards to the application) has not increased.

The first computing device may be adapted to determine whether the first cost of the first communication link is above a remapping threshold. By way of example, the remapping threshold may indicate that the first communication link is operated in its nonlinear region (i.e. with a cost function in the nonlinear region). If it is determined that the first cost is above the remapping threshold, the first computing device may be adapted to determine the costs of the first communication link and of the at least one neighbour communication link subject to the ingress load. Furthermore, the first computing device may be adapted to forward the component placement request to the second computing device or to the at least one neighbour computing device, based on the determined costs. By way of example, if it is determined that the cost of the first communication link subject to the ingress load is smaller than the first cost, the component placement request for the third component may be forwarded to the second computing device. On the other hand, if it is determined that the cost of the first communication link subject to the ingress load is still above the remapping threshold, and that the cost of the at least one neighbour communication link subject to the ingress load is lower (e.g. within the linear region of the cost function), then the component placement request for the third component may be forwarded to one of the at least one neighbour computing devices.

The first computing device may be adapted to send an indication of the first cost and/or of the second cost along with the component placement request to the at least one neighbour computing device. As such, the at least one neighbour computing device may be enabled to take into account the first cost, when making a placement decision for the third component. By way of example, the at least one neighbour computing device may be adapted to determined that the cumulated cost of the links between the first computing device and the at least one neighbour computing device and between the at least one neighbour computing device and the second computing device is higher than the first cost and/or the second cost. In such cases, the at least one neighbour computing device may be adapted to send the placement request for the third component back to the first computing device, along with an indication of the cumulated cost. The first computing device may then be configured to forward the placement request for the third component to another one of the at least one neighbour computing devices.

The first computing device may be adapted to determine a gradient of the link load cost function of the first communication link. Furthermore, the first computing device may be adapted to determine whether to place the third component on the first computing device or whether to forward the component placement request to the second computing device or to the at least one neighbour computing device. For this purpose, the first computing device may take into account the determined gradient. By way of example, the first computing device may be adapted to forward the component placement request to another computing device is the determined gradient is above a gradient threshold. Typically, the first computing device may be adapted to determine a plurality of gradients of the link load cost functions of a corresponding plurality of communication links. In such cases, the first computing device may be adapted to select one of the plurality of communication links based on the plurality of gradients and to forward the component placement request on the selected communication link to the computing device which can be reached via the selected communication link.

The local resource list may comprise information indicative of processing cost functions for processing resources on the first computing device, on the second computing device and/or on the at least one neighbour computing device. The third component may have a predetermined processing resources demand. The first computing device may be adapted to determine whether to place the third component on the first computing device or whether to forward the component placement request to the second computing device or to the at least one neighbour computing device, also based on the predetermined processing resources demand and the processing cost functions. In particular, the first computing device may be adapted to determine whether the first computing device, the second computing device and/or the at least one neighbour computing device have spare processing resources to meet the predetermined processing resources demand. In order to make the above mentioned determination steps, the first computing device may be adapted to receive information regarding the processing cost functions for processing resources and/or information regarding spare processing resources of the at least one neighbour computing device from the at least one neighbour computing device.

Alternatively, the first computing device may be adapted to not have any information regarding the spare processing resources of the second computing device or the at least one neighbour computing device. In such cases, the first computing device forwards the component placement request to the second computing device or to the at least one neighbour computing device in a "blind" manner. The receiving computing device may then verify whether sufficient processing resources are available or not. The receiving computing device can either neglect the component placement request or it can itself forward this request to one his neighbour computing devices. In other words, the first computing device may be adapted to forward the component placement request to the second or to one of the neighbour computing devices. The receiving computing device may be adapted - in case of missing resources or exceeding of a cost threshold - to either reject the forwarding of the component placement request and to return the responsibility for the component placement request to the first computing device. Alternatively, the receiving computing device may be adapted to forward the component placement request to one of its neighbour computing devices.

The first computing device may be adapted to host a plurality of components of the application, wherein the plurality of components of the application exchange data among each other according to different loads. Furthermore, the plurality of components of the application may exchange data with remote components of the application on remote computing devices according to a total external load. The first computing device may be adapted to determine a subgroup of the plurality of components, such that the load of the data exchanged directly between the subgroup and (all) other components of the applications (including the remote components and the one or more components of the plurality of components which are not part of the subgroup) is lower than the external load. In other words, the first computing device may be adapted to select a subgroup of components such that the load of the data exchanged with other components of the application is reduced. As a result, the link load to the remote computing devices may be reduced. For this purpose, the first computing device may be adapted to send one or more placement requests regarding respective one or more components of the plurality of components which are not part of the subgroup to respective one or more of the remote computing devices. Furthermore, the subgroup of components may be treated as a single component. For this purpose, the first computing device may be adapted to send a combined placement request regarding the subgroup of components to a remote computing device, wherein the subgroup comprises more than one component.

The first computing device may be positioned in a first topological area of the media cloud. Typically, the distributed cloud (referred herein as a media cloud) comprising a plurality of such computing devices is partitioned into a plurality of topological areas (which may be further subdivided into one or more regions). The first computing device may comprise a topological list indicating a plurality of reference computing devices positioned in a plurality of topological areas other than the first topological area, respectively. In other words, the first computing device may hold a topological list which provides an indication (e.g. a network identifier) of at least one reference computing device positioned within each of the other areas (or regions) of the distributed cloud. The topological list may comprise one or two reference computing devices per other area (or region). Typically, the reference computing devices are randomly selected from the available list of computing devices within a region, in order to ensure that each computing device has a different anchor point to the region, thereby removing single points of failure.

The first computing device may be adapted to determine, based on the topological list, if the third component of the application is to be placed in the first topological area or in one of the plurality of topological areas other than the first topological area. If it is determined that the third component of the application is to be placed in one of the plurality of topological areas other than the first topological area, the first computing device may be adapted to pass the component placement request to the reference computing device of the respective topological area of the plurality of topological areas other than the first topological area. On the other hand, if it is determined that the third component of the application is to be placed in the first topological area, the first computing device may be adapted to select the at least one neighbour computing device from the first topological area.

According to another aspect, a distributed network for cloud computing is described. The distributed network is referred to as a media cloud in the present document. The distributed network may comprise a first computing device, a second computing device and at least one neighbour computing device according to any of the aspects outlined in the present document.

According to a further aspect, a method for placing a component of an application onto a computing device of a media cloud is described. The method may comprise hosting a first component of an application on a first computing device. Furthermore, the method may comprise sending data according to a first load via a first communication link to a second component of the application, hosted on a second computing device. In addition, the method may comprise receiving a component placement request for a third component of the application at the first computing device. The third component may receive data from the first component according to an ingress load and the third component may send data to the second component according to an egress load. The method may comprise determining whether to place the third component on the first computing device or whether to forward the component placement request to the second computing device or to at least one neighbour computing device of the first computing device. For this purpose, the method may make use of the first load, the ingress load, the egress load and/or the link load cost functions on the first communication link and/or on at least one neighbour communication link to the at least one neighbour computing device.

According to a further aspect, a software program is described. The software program may be adapted for execution on a processor and for performing the method steps outlined in the present document when carried out on a computing device.

According to another aspect, a storage medium is described. The storage medium may comprise a software program adapted for execution on a processor and for performing the method steps outlined in the present document when carried out on a computing device.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein

Fig. 1 shows an example arrangement of computing nodes within a cloud;
Fig. 2 illustrates an example representation of the regional grouping of a plurality of computing nodes;
Fig. 3 illustrates an example resource and topology graph of a computing node;
Fig. 4 illustrates example components of an application;
Fig. 5 illustrates the placement of application components within an example media cloud;
Fig. 6 illustrates an example placement scheme for an application component within a media cloud;
Fig. 7 shows an example link cost function;
Fig. 8 shows an example clustering scheme for application components; and
Fig. 9 shows an example clustering scheme for application components which are arranged in a branched structure.

Up to today increased transport capacity demands in the networks are mainly achieved by enhancing installed bandwidth in the networks either by technological breakthroughs or the installation of new infrastructure elements. But there exist substantial concerns, that this evolution of networks subject to increased capacity demands cannot be expected to last, at least at reasonable costs. As future network enhancements become more and more challenging, there is a need for alternative approaches to meeting the increasing capacity demands. A well established approach to handling an increasing demand for network capacity is to add "higher layer" intelligence to the networks. The added "higher layer" intelligence aims to reduce the overall traffic, thus enhancing available transport capacity e.g. by localizing traffic. The first success of this concept of "higher layer" intelligence was the introduction of Content Delivery Networks (CDN). CDNs basically enable the massive scale adoption of (media) services comprising broadcast delivery characteristics in the Internet.

However, there is an emerging trend towards personalized media streams, where the media streams need to undergo processing somewhere in the Internet, i.e. in the cloud, thereby enabling the evolution of e.g. IP-TV towards personalized "multi-view" video service (see e.g. Ishfaq Ahmad, "Multi-View Video: Get Ready for Next-Generation Television," IEEE Distributed Systems Online, vol. 8, no 3, 2007, art. no. 0703-o3006) or enabling cloud based gaming services like "OnLive" (see e.g. OnLive, http://www.onlive.com/). While CDNs are built for the efficient delivery of the same content to a multitude of receivers, the new trend to individualized content streams which requires processing within the network is challenging the Internet infrastructure.

Today's applications and corresponding cloud infrastructures are typically designed in a way that data is moved through the network towards a dedicated location (i.e. a data center) where the application is executed. Preserving this cloud computing paradigm in the future Internet design would result in huge amounts of traffic which need to be transported to "arbitrary" data centers, where the processing functionality for media streams is located. It is proposed in the present document to change this paradigm of a centralized application processing at designated data centers. In particular, an intelligent infrastructure is proposed which forces the movement of applications or parts of the applications according to application requirements. Such schemes can offload unnecessary "long distance" traffic from the networks by localizing traffic and thus will help to overcome the issue of limited availability of transport capacity in future networks.

Even with today's cloud infrastructures, offloading of computing infrastructure into the Internet has become a commodity. Cloud computing providers, like Amazon EC2, Rackspace or Microsoft Azure, offer their infrastructure or platforms as a service, providing features like automated scalability and instant deployment, which supports the very dynamic needs of Internet based services like Facebook or Animoto.

However, today's approach has a significant cost: today's approach increases the overall load on the core networks because instead of keeping traffic local, more traffic is routed to centralized data centers (provided by the cloud computing providers). The centralized data centers process the data and send it back to the requestors. While this seems to be feasible for traditional request/response based web-services, this centralized approach might break the design of the actual Internet architecture for massive media centric real-time applications like personalised MultiView video rendering.

It is proposed that the Internet embeds intrinsic capabilities to directly support a service oriented computing paradigm that enables developers and end-users to execute their personalized applications onto an integrated network and computing infrastructure.

Autonomous services should be the components from which such applications can be built. The autonomous services should not be bound to a specific host infrastructure hardware addressed by their physical instantiation on that machine but should become moveable objects, which can be dynamically deployed on the distributed computing resources and collocated to the data-flows between the sources and sinks of the data flows.

The autonomous services may make use of well-defined abstraction models of the services, in order to enable the dynamic composition of services and the potential adaptation or relocation of services if workflow or context conditions change. A loose coupling of service components should enable the interconnection of the service workflow on demand and should facilitate adaptations of the workflow needed to provide the same relevant data to the user by modifying the service composition (given that services and their interfaces have some semantic service description).

From a user's perspective, a cloud typically behaves like a centralized server. Nevertheless, the cloud typically utilizes an aggregated or distributed set of free resources in a coherent manner. By monitoring the computational load and the network resources, it is possible to dynamically scale-up and scale-down instances and manage the network load without necessarily applying QoS (Quality of Service) management mechanisms on the data-paths.

Especially in media applications such components can be implemented as data transformation services, i.e. entities, which consume data in order to generate another data stream. In other words, media applications may be modelled as a sequence of data transformation services. As such, video cameras are data sources that generated video data. Video processing components, like video codecs, scaling or framing components may allow for the transformation of data in order to adapt the media stream to a suited format e.g. for mobile terminals or TV displays. Image recognition can identify objects out of the video signal, which can be merged from different sources to generate a 3D model of the scene.

Using such a data transformation model and the original video streams of the cameras, a new personalized view for a user can be rendered and sent to the display. Such a service can be represented by a directed graph, which will be instantiated upon deployment time. During the instantiation process, the required resources are selected from an available resource pool. As a result of selecting the required resources during the instantiation process, the overall traffic imposed by the service onto the network will be reduced. In other words, the resource selection process may be directed at reducing the overall traffic imposed by the service onto the network. The resource selection process may furthermore consider optimizing QoE (Quality of Experience) aspects for consumers of the service.

Applications with varying service characteristics can benefit to a different extend from the Media Cloud (MC) concept. Major benefits can be achieved on applications that require a consistent flow of continuous data over a certain period of time or on applications that require the transfer of large amounts of data for processing. On the other hand, for applications which require only a very limited transfer of data, the service transfer overhead and the instantiation cost may exceed the gained benefits. As a consequence, it may be beneficial within the MC concept, to provide mechanisms allowing the retrieval of "meta-information" associated with data. Such "meta-information" associated with data may provide information on where the data is located, on how much data needs to be transferred for service execution, if the data is a constant media (e.g. video) stream or only a limited amount of data (e.g. a data file) which needs to be transferred prior to service execution.

In order to support media cloud scenarios inherently by the network architecture, some basic principles from the existing Internet architecture should be reconsidered. First, well-known principles from content networking should be extended to support the MC approach described in the present document. Content networks explore locality of data, i.e. instead of serving a request for data at the source, a local cached copy of the data is delivered. A scheme may be proposed that directly addresses the content and uses this information for routing purposes, instead of using the location where the content was generated for routing decisions.

An extension of the above mentioned scheme would be to not only address the content, but to also address a service that is able to provide the requested data and instantiate a processing pipeline to do the necessary transformations. Instead of performing centralized processing for all users in a single domain, media flows may be combined or split at appropriate locations exploiting intrinsic "multi-cast" capabilities in the network layer where available. This is beneficial over existing schemes, where multi-cast has to be explicitly incorporated by the service developer not knowing if "multi-cast" is supported in the network and therefore can only be achieved by means of overlay mechanisms.

If the traffic patterns of (media) flows exchanged between different service components are accurately predicted, the MC-enabled network described herein can operate on such flow patterns directly, instead of executing routing decisions on a per packet basis. Thus the MC-enabled network can enable efficient flow-based switching by providing available meta-information of media streams, exchanged between service components to the network. This information can enable the control plane in such MC-enabled networks to increase the overall throughput.

The MC scheme may also consider that a flow based switching paradigm is typically achieved at the cost of supporting more dynamicity in flow control handlers. In order to "limit" such costs, MC-enabled networks should provide capabilities to aggregate multiple data streams which are sharing paths between service components executed in the same data centers. By introducing an aggregated granularity of joint streams between data centers, the control complexity in the core network itself can be limited.

A further requirement on the network when providing a MC is that flows should be handled in the network in such ways, that uninterrupted relocation of media flow end-points, which are no longer machines but services (i.e. service components), is supported. In consequence, for MC-enabled networks, client APIs like the socket interface may need to be modified. As MC-enabled services are built from self-contained components generally operating on input stream(s) of data to generate their output data, which is then distributed to the subsequent consumer components of this service, the use of dedicated sockets for communication purposes may no longer be sufficient and new paradigms may need to be considered in the context of a future Internet.

Typically, the processing resources of a usual cloud application have to be assigned prior to service runtime. Most often this mapping is a manual administrative task of deciding which data centre should host a specific application. As a consequence, regardless the location of origin of data to be processed, the data to be processed typically has to be sent towards its preassigned data centre, be processed there and sent out to its destination. Such a static placement scheme is not sufficient to exploit the benefits of distributed media application deployments, which improve service performance and resource utilization by dynamically adapting service execution at runtime. For example, a global video conferencing service may be enabled to grow and shrink, or move to more appropriate locations following the usage pattern of the users of the video conferencing service. This adaption of resources may be achieved by creating, by taking down or by moving application components of the video conferencing service within the MC. The present document is directed at efficiently providing such placement and re-placement decisions for application components, while avoiding complex service logic (middleware) taking care about service scaling and component locality.

For truly distributed service deployments, which operate at least on the granularity of per-user components, educated component placement decisions can typically only be achieved during service runtime. Only at that time data sources and data sinks of relevant media streams are known and thus media processing components can be assigned to close-by processing resource locations, thereby resulting in reduced end-to-end service latency and in offloaded networks by keeping the traffic local. Changing service profiles and varying traffic patterns might even require resource re-assignment for components during service runtime. Thus efficient component placement typically requires not only a one-shot mapping decision when an application component is instantiated, but typically also requires the continuous evaluation of resource assignments.

The Media Cloud described herein typically uses light-weight application components (i.e. application components having a relatively small data size) and provides a distributed orchestration middleware following a flow-based programming model adapted to effective media processing. Due to the small size of the application component, the components are flexibly deployable during execution time and can be placed at a location where the application component runs most effectively to provide highest user experience at lowest cost.

Application components may separate the inner functional logic from the external application logic. Typically, application components are triggered by the arrival of a new instance of streamed media e.g. by the arrival of a video frame. In response, messages are delivered towards an appropriate application component via determined connectors - which are referred to as "ports" in the Media Cloud - that connect the application component to the execution environment. When a new video frame is received the application component operates on it, e.g. converts the received frame from a Red-Green-Blue (RGB) colour space to a gray-scale image, merges frames from two input streams into a single output image, or performs face detection.

Whenever the application component has concluded its operation and has generated results, it invokes the execution environment to transfer the processed data to potential consumers of the data generated by the application component. The execution environment identifies and resolves consumers of the generated output and handles the data transport. This handling by the execution environment hides external bindings from the application component and allows dynamic binding and reconfiguration of the overall application even at execution time. In order to assure that the sender and receiver are interpreting a message in a consistent way, different port types may be considered.

Within the MC context described in the present document, the overall application logic is established by control components which create or dismiss application components and which construct or release connections between the application components. Although control components typically do not participate in the media path, the control components are connected to their child components through a special control port, in order to provide configuration parameters, send control commands to the child components or to receive error messages.

Typically, a new application component is instantiated at the same local resource where the corresponding control component resides. After the connections to other application components in the media flow are established, the execution environment invokes a mapping process as outlined above and transfers the application component and the state of the application component to a resource that is better suited to host the application component for performance, latency or other reasons.

The flexibility of the application component-based approach allows extending applications by on-demand addition of further application components e.g. by a face detection functionality in order to identify the presence of a known person instead of an arbitrary moving object.

In the context of the application component placement process various technical problems are e.g.: The realization of efficient resource assignment strategies and management schemes that provide sufficient performance and scale even in the case of highly distributed resource deployments algorithms, the identification of reasonable limits of fine-grained service deployments (i.e. the identification of an optimum granularity of the application components), the design of appropriate assignment algorithms and strategies, and the feasibility of a fully distributed assignment approach.

The present document addresses these technical problems. In particular, the present document describes a method for placing application components within the MC.

A possible solution to a fully distributed assignment approach could be to not assign an application component in a single computational step to a computational resource based on 'global' knowledge, but to forward a component from resource to resource based on local knowledge at the resource until the currently best fitting resource is reached. This approach is comparable to the forwarding approach for IP packets in IP networks. In such a forwarding approach the topology and demand information may be limited to neighbourhoods, or circles of small radius around selected facilities, whereas demand information is captured implicitly for the remaining (remote) clients outside these neighbourhoods, by mapping the components to clients on the edge of the neighbourhood. The circle radius may be used to regulate the trade-off between scalability and performance.

A further approach may be the use of distributed mapping nodes for replica selection. An algorithm may be used which maintains a weighted split of requests to a customer's replicas, while preserving client-replica locality to the greatest possible extent. Such an approach solves an optimization problem that jointly considers client performance and server load.

The above mentioned approaches typically do not memorise the current distributed system state together with the distributed service requests. As a consequence each minor change of the system state or the request rate may lead to the necessity to solving an optimisation problem which requires time and processing effort and/or to a multi-step application component re-placement process which is slow and may involve local minima. Furthermore, the above mentioned approaches do not provide capabilities for the identification of recurrent and synchronized service attacks.

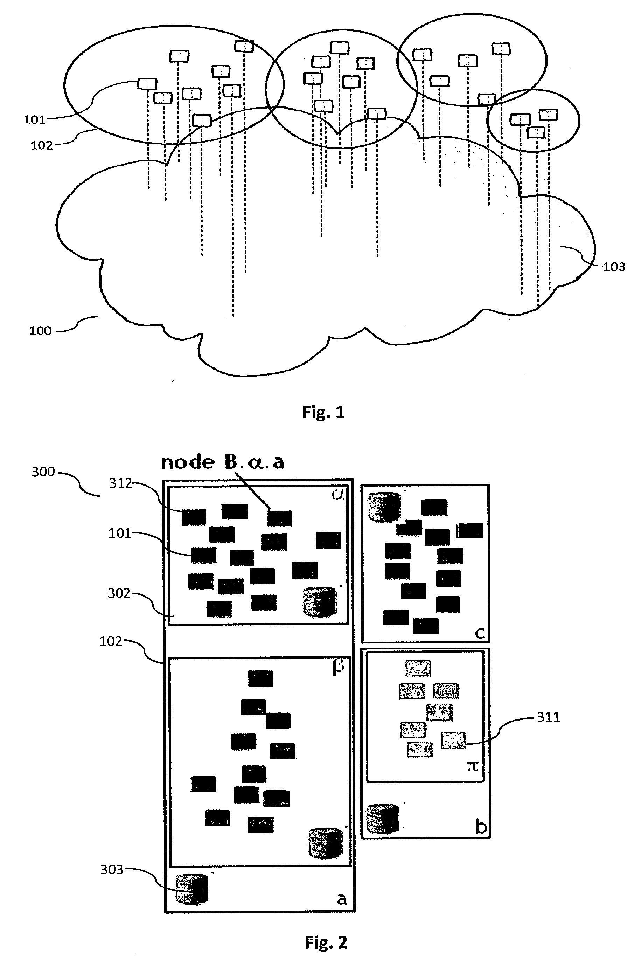

Fig. 1 illustrates a set 100 of computing nodes (also referred to as computing devices) 101. These computing nodes 101 form a flat arrangement without hierarchy, i.e. none of the computing nodes 101 of the set 100 has an overall control or management functionality. Each of the computing nodes 101 works independently from the other computing nodes 101 and solely relies on the individual information of the structure of the set 100 available at the computing node 101. The set 100 is referred to as a media cloud (MC) 100 in the present document. The different nodes 101 are interconnected via a communication network 103 such as the Internet.

It is proposed to use a distributed arrangement 100 of cloud computing appliances 101, in order to provide services or applications in a distributed manner (as opposed to a centralized manner). As a result of a distributed provisioning of services or applications, it is expected that the services or applications can be provided in a more resource efficient manner (notably with regards to the required transmission resources of the communication network 103). In this context, a fully distributed resource management (RM) system for the cloud computing appliances 101 is described, whereby none of the RM functions provided on the cloud computing appliances 101 has full knowledge with respect of the available resources and of the topology of the arrangement 100. Overall, it is desirable to provide an autonomous, distributed and autarkic resource management (RM) function of each of the nodes 101 of the MC 100.

In this context, an "autonomous" RM function means that each node 101 decides autonomously about its local resource neighbours, in order to decide where to have an application or a component of an application executed. Furthermore, an "autonomous" RM function decides autonomously on the representative of another cloud resource region. In other words, the MC 100 may be subdivided into a plurality of cloud areas 102, and each of the nodes 101 of a first area 102 may autonomously select a node 101 of a second area which is representative of the entire second area 102 (or a sub-region of the second area 102). As such, each node 101 may autonomously build up a local resource graph of the resources which are available in the neighbourhood of the node 101 within the area 102 of the node. Furthermore, each node 101 may build up a topological list of representative nodes of the other area 102 of the MC 100, thereby providing each node 101 with a point of entry into all the areas 102 (and possibly all of the subregions) of the MC 100.

The RM function of each node 101 is "distributed" in that a resource management function is placed on every node 101. In an embodiment, none of the nodes 101 has any particular special role (e.g. a coordination role). Each node 101 performs its RM function in an "autarkic" manner, meaning that a decision on where to place a software component within the MC 100 is solely performed by the node's RM function (without consulting a higher layer control function). In order to work in an "autarkic" manner, each node 101 holds an individual view of near/local resources (e.g. via a local resource graph) and an individual linkage to other areas and/or (sub)regions (e.g. via the topological list).

The nodes 101 of the MC 100 do not share a common overall network map of the position of all the nodes 101 within the MC 100. Instead, each node 101 comprises an individual network map which reflects the node's view of the entire MC 100. The individual network map may comprise the local resource graph (thereby indicating some of the neighbouring nodes within the same area or region 102) and the topological list (thereby providing at least one representative node of each area 102 (or region) of the MC 100).

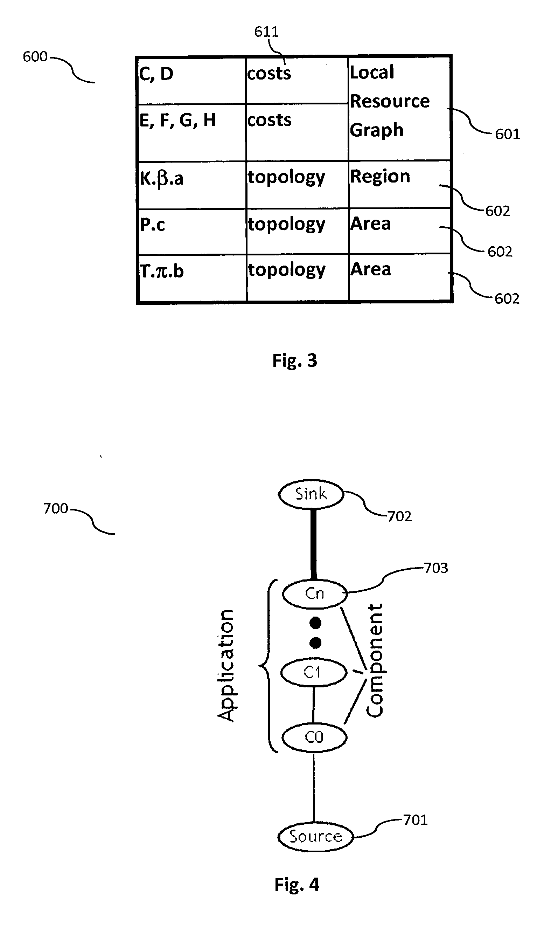

Fig. 2 illustrates a topological clustering 300 of nodes 101. As indicated above, the topology of the MC 100 can be ordered into hierarchy levels (e.g. of areas 102 which comprise one or more regions 302). As such, a node 101 (e.g. the node B of Fig. 3) may be attributed to a region 302 (e.g. the region $\alpha$) which itself is attributed to an area 102 (e.g. the area a).

A particular node 101 only has a limited view of the entire MC 100. This limited view of the MC 100 is used by the node 101 to perform an "autonomous" RM function. This part of the RM function may be referred to as the topology management performed by the node 101. In order to be able to reach each area 102 (or region 302) of the MC 100, each node 101 adds one (maybe several) representative of another area 102 (or region 302) into its topology tree or topology list (also referred to as topological list). If the nodes of the MC 100 are organized in one hierarchy level e.g. in areas 102 (without any subdivision into regions 302) then each root node 101 should store an (arbitrary) representative of any other area 102. If the nodes 101 are organized into two hierarchy levels e.g. regions 302 and areas 102 (each area 102 holding one or more regions 302) then each root node 101 should store an (arbitrary) representative of any other area 102 and an (arbitrary) representative of any of the regions 302 in this area 102.

As such, each node 101 puts itself into the root position of its local resource graph (RG) which provides the node 101 with the ability to perform resource management within an area 102 (or within a region 302). Furthermore, each node 101 puts itself into the root position of its topology graph (or topology list). This provides the node 101 with its individual view of the network. Each (root) node 101 adds one or more representatives of other regions 302 (and/or areas 102) into its topology graph (TG). It should be noted that any node within a region 302 can be a representative of this region 302, i.e. all nodes are equal and none of the nodes of an area 102 or region 302 has special tasks. In case of a two hierarchical topology (comprising areas 102 and regions 302), a maximum of two steps are required to address the correct region 302 from each of the nodes 101 using the TG of the node 101.

The local and regional topological information may be stored within a table 600 as shown in Fig. 3. The table 600 indicates the nodes of the local resource graph 601 including the costs 611 associated with the respective nodes of the local resource graph 601. The costs 611 of another node may comprise resource values attached to the other node, e.g. available processing resources, available link bandwidth, available memory resources, achievable round trip time, etc. Furthermore, the table 600 provides a topology list 602 indicating the representative nodes of other regions and/or areas. The topology information entries may also hold multiple alternatives (instead of a single entry per region / area). As such, the memory table 600 is a representation of the nodes viewpoint of the MC 100. The number of nodes within the local resource list 601 is typically limited to a predetermined number which is smaller than the total number of nodes within an area / region. The number of nodes per area / region within the topology list 602 is limited to a number of nodes (e.g. one or two nodes) which is smaller than the total number of nodes within an area / region. This means that each node 101 only has a restricted view of the complete MC 100.

A node 101 manages the resources and topology in a table 600. The resource entries 611 store the cost tuple information received from the neighbouring nodes. Depending on the distance (d) from the root element, the precision of the cost tuple values can vary with respect of accuracy, actuality, aggregated view, etc.. The cost tuples may contain resource values such as processing, memory, link bandwidth, RTT (round trip time), etc.. In case of a component instantiation process (i.e. a component placement process), the node first analyzes its own resource state and then compares it with the nodes in the RG 601. The node decides whether it instantiates the component locally or forwards the request to a neighbour node within the RG 601. A component placement scheme which makes use of the link and/or processing costs stored in the table 600 is illustrated in further detail below.

The local resource graph 601 may be used for the resource management performed by a node 101. As indicated above, each node performs an independent resource management function based on the limited information available at the node 101, in particular based on the local resource graph 601. The local resource graph 601 is based on a subset of nodes (which is typically taken from the same region). It should be noted that, for nodes 101 which are positioned near the border between a plurality of regions 302, the neighbouring nodes within the local resource graph 601 may comprise nodes of other regions. Typically, the local resource graph (RG) tree depth is limited (to the near network neighbours, or to the vicinity). In a booting process of the node 101, the positions within the local resource graph may be negotiated from a given set of (regional) nodes. In other words, the node 101 may select an appropriate subset of available nodes to be placed within the local resource graph. A continuous (slow) optimization process allows to replace nodes by other nodes in the same region. This means, if a root node 101 observes that a node within its local resource node does not contribute (significantly) to the resource management function of the node 101, the root node 101 may decide to replace the non contributing node by another node from the neighbourhood of the root node 101.

As indicated above, each node 101 in the local RG is attributed with a cost scalar/tuple 611. This tuple 611 comprises cost information (e.g. link costs or processing costs) and helps to decide where a new component instantiation request has to be placed. In other words, when deciding where to place the execution of the component of an application within the MC 100, the node 101 may consult the local RG 601 and place the component with one of the nodes comprised within the local RG 601, based on the costs 611 provided by the node. The nodes in the local RG 601 inform their RG root node 101 regularly about the current resource state. In other words, the nodes of the local RG 601 push information regarding their resources to the root node 101, thereby ensuring that the root node 101 can make substantiated resource management decisions. In particular, the local RG information (e.g. the cost 611) is used to identify one of the nodes within the local RG (incl. the root node itself) as an appropriate node for component placement. It should be noted that the placement process of a component can take several iterations. On the other hand, there is no central or partial central functionality for performing the resource management function, thereby removing the risk of a single point of failure.

As such, each node 101 has a limited network view which comprises the local resource graph 601 and the topological graph 602 indicating one or more representative nodes of the other regions. As indicated above, the topology of the MC 100 may be determined in a distributed manner using the Vivaldi and Meridian algorithms. At an initialization stage, each node 101 may be able to access the complete list of nodes within the same region / area. The node 101 uses this list of nodes to build the local resource graph 601. Furthermore, at the initialization stage, each node 101 may select at least one node from the remaining regions / areas. The selection of the at least one node of the remaining regions / areas should be performed in a random manner, in order to ensure that the nodes of a region have different representative nodes of the other regions, thereby preventing single point of failures or loopholes.

In the following, further details regarding the mapping function provided by a node 101 are described. Based on the topology and resource information available at the nodes (i.e. the information 600), the nodes of the MC 100 may determine on the (optimum) placement of software (media) components on the nodes 101 of a Media Cloud system 100. As shown in Fig. 4, an application 700 is typically composed of a plurality of components 703. By way of example, a conference call application comprises a plurality of audio codec (coding / decoding) components (one for each participant of the conference call), as well as a mixer component (for connecting the voice channels of the participants). Typically, an application 700 (and the components 703) has a source 701 (from which data is provided) and a sink 702 (to which data is provided). In the above mentioned examples, the individual participants of the conference call application may be considered to be sources and sinks. The task of the component placement process is to place the components 703 of the application 700 at appropriate locations within the MC 100, in order to reduce the consumption of resources of the communication network 103. By way of example, by placing the audio codec component of a conference call application within the proximity of the respective participants, the transmission bandwidth required by the application can be reduced (as only encoded voice traffic is transmitted through the communication network 103). Furthermore, the mixer component of the conference call application should be placed at a central location between the participants of the conference call.

In Fig. 4, the different widths of the links between the different components 703 and between the source 701 and the sink 702 indicate different requirements regarding the links (rubber band model). Bands between components 703, which indicate a higher spring constant, indicate that the components 703 should be placed in proximity with respect to one another (e.g. on the same node)

The placement procedure should take into account the available node resource and the available link resources. Furthermore, the requirements of the application components 703 (e.g. with regards to processor resources, memory resources, link bandwidth, delay, jitter) should be taken into account.

Such placement decisions could be performed in a centralized manner. However, central or meshed solutions for component placement typically do not scale in large systems. Furthermore, such central solutions tend to provide single points of failure.

In the present document, a distributed placement scheme using the limited information available at the nodes 101 of the media cloud 100 is described. In particular, a distributed placement scheme is described which makes use of the cost information comprised within the table 600 (notably the link costs and/or the processing costs).

Over the last decade, the penetration of broadband Internet access and the commoditization of server hardware have dramatically increased. These trends have resulted in planetary-scale distributed applications that span millions of end-hosts and that run on diverse, partly highly specialized resources hosted in distributed computing sites instead of centralised data centres. Such large scales make it difficult to build, deploy and manage such distributed applications.

In order to enable an efficient and high quality application component placement decision, a mapping solution is described which relies entirely on information readily accessible at the computing site or computing device 101 where a single application component or a component group is executed, such as media traffic at the input or output interface of the application component. Additionally, knowledge accessible at the computing site or computing device 101 of the single application component on the application deployment topology is exploited for enhanced mapping applications where a view into other media cloud areas and regions is required.

The resource manager RM on a first node 101 is typically aware of the nearest neighbouring nodes 101 which comprise application components 703 with which one or more application components 703 which are running on the first node 101 are interacting. Furthermore, the first node 101 typically has knowledge of the local ingress and egress maximum bitrate, average bitrate, bitrate distribution function, etc., for the data exchanged between the application components 703. This data regarding the components of applications located on the first node 101 may be stored in an application database on the first node 101. Furthermore, the first node has knowledge on the local computing and processing resources and limitations (CPU, GPU or other resource type, available processing cycles, memory allocation and the statistical characterisation of these).

The present document describes a method for finding an attribution of application components 703 $C_1, C_2, ...$ with defined local ingress and egress interface loads $li_1, li_2, ...$ and $le_1, le_2, ...$ between the application components 703.

As long as these inter-component interfaces do not leave the node 101 (meaning that the components 703 are executed by the same CPU/Core in the same memory of the node 101) there is typically no allocation of interface resources. However, if these adjacent application components 703 are located on different nodes 101, media cloud transmission resources are used which yield a total link load of at least $L_{total} = \sum_{i,j} l_{i,j}$ (summation of all traffic volume between all node pairs $i, j$) without usage of global knowledge of the entire media cloud application deployment.

Similarly, the total processing load may be defined as the sum of the processing of the application components:

$P_{total} = \sum_{k} p_k$ with $p_k$ being the node processing load on node k. The total load of a media cloud may then be defined as the sum of all link loads and of all processing loads $L_{total} = \sum_{i,j} l_{i,j} + \sum_{k} p_k$.

In case that any one of the node's interface loads approaches a critical value, the resource management can initiate a move of one or multiple components 703 to a new node 101. Each node 101 typically hosts a number of components 703 and each component 703 may be characterised by its ingress and egress interface loads. As long as the component interface loads appear only between adjacent components within the same CPU/core/memory, they are typically not contributing to the node's interface load and therefore can be neglected. But as soon as two adjacent components 703 are instantiated on two different CPUs/cores/memories (i.e. on two different nodes 101), the egress (resp. ingress) load of the component *le, li* contributes to the node's interface load.

Components 703 can be moved in order to reduce the load on a critical link between nodes 101 of the MC 100. The instantiation of a new component 703 may introduce a new degree of freedom in order to reduce the total link cost $L_{total}$, wherein the benefit typically depends on the detailed form of the cost function of the total link cost.

The local link load $l_{i,j}$ may be defined as the total flow between any two media cloud nodes 101 $P_i$ and $P_j$. Each link may have a capacity $cap_{i,j}$ which is a measure for the amount of traffic flow the link between the nodes $P_i$ and $P_j$ can take. The load on a link may be given by the sum of all demands that are sent over the particular link. The utilisation of a link between $i$ and $j$ may be given by the ratio of the link load and the capacity $l_{i,j} / cap_{i,j}$.

Typically, a network provider is interested to keep the loads within the capacity limits of each link in order to provide a smooth network operation. The network provider's cost function $\Phi$ sums up the cost of all network links, and the cost of a link is attributed to the link utilisation. A piece-wise linear and convex cost function may be assumed for the link cost function $\Phi$. Similarly, there may also be a cost function $\Psi(p)$ describing a relationship between the processing load to the processing cost. The total cost function for a certain mapping of the application components 703 in the MC 100 may be given by $Cost_{total} = \sum_{i,j} \Phi(l_{i,j} / cap_{i,j}) + \sum_{k} \Psi(p_k)$.

Considering the general case of a large MC 100 deployment with up to millions of media clouds nodes 101 and links, it may be difficult to deduce alternative mappings in case of the occurrence of "hot spots" or overload situations within the MC 100, in particular if there is no global knowledge of the entire media cloud deployment available, but only local knowledge of the nearest neighbourhood of the application component under consideration. In the following, a method for solving this problem relying only on local information available from the interface of each application component is described.

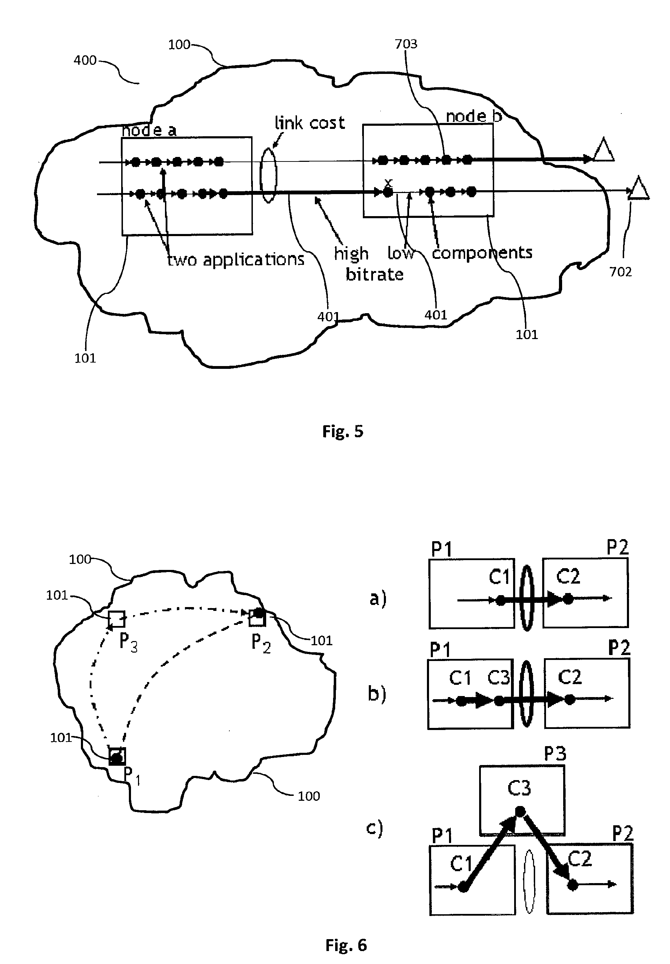

Fig. 5 illustrates an example 400 where two applications 700 comprising respective application components 703 are placed on the node "a" 101 and the node "b" 101 of a media cloud 100. Fig. 5 illustrates the links 401 between adjacent application components 703. The width of the links 401 visualizes the bitrate required on the link 401 between the application components 703. Furthermore, the sinks 702 (e.g. clients within the media cloud 100) are illustrated.

In the following, the special case of two application components 703 *C1* and *C2* located on processing nodes 101 *P1* and *P2* with the processing cost function $\Psi(p)$ is considered. These components are connected with a link $l_{1,2}$ with the link cost function $\Phi(l)$. Located in the neighbourhood of *P1* and *P2* is a processing node *P3* which is connected to P1 and P2 with links $l_{1,3}$ and $l_{2,3}$, respectively. This is illustrated in Fig. 6 (left hand side).

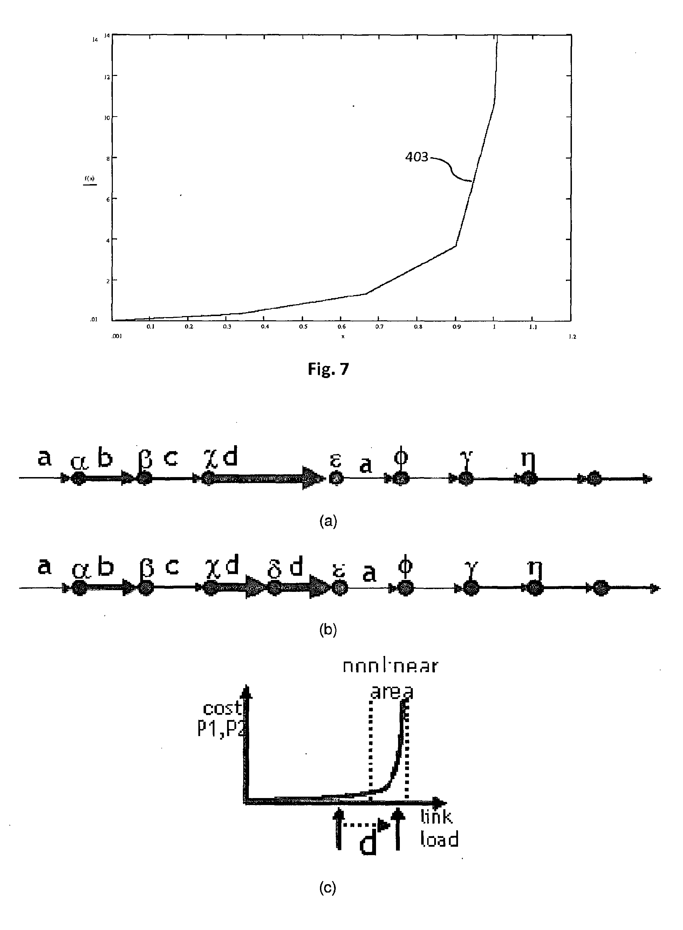

In an example, the link $l_{1,2}$ (i.e. the link between the nodes P1 and P2) is approaching its capacity limit. The distributed Resource Manager RM identifies that the link cost $\Phi(l)$ between *P1* and *P2* is in an expensive region of the cost function $\Phi(l)$. An example link cost function $\Phi(l)$ 403 is illustrated in Fig. 7. The link cost function 403 illustrates the cost for adding load to a link as a function of the link utilization (normalized between 0 and 1). In can be seen that this link cost function 403 comprises a linear region with an approximately constant increase of the link cost (e.g. for a link utilization between 0 and 0.8) and a nonlinear region with an exponential increase of the link cost (e.g. for a link utilization greater 0.8). In the linear region, the link cost function 403 may be modelled by a linear cost function $\Phi(l) = d\dfrac{l}{cap}$ ,

wherein $d$ is a constant. In the nonlinear region, the link cost function 403 may be modelled by a nonlinear function, e.g.

an exponential function or a quadratic cost function $\Phi(l) = a + c\left(\dfrac{l}{cap}\right)^2$ . Alternatively or in addition, a continuously

differentiable cost function $\Phi(l)$ may be assumed.

In the above mentioned example, the link $l_{1,2}$ is approaching its capacity limit, i.e. the link $l_{1,2}$ is operated in its nonlinear region. The probability that a neighbour node 101 $P3$ can provide the connectivity between the application components $C1$ and C2 for a lower cost than the link $l_{1,2}$ is non-zero. The cost benefit $\Delta Cost_{total} = Cost_{total,initial}$ - $Cost_{total,final}$ of transferring a new application component 703 $C3$ from the node $P1$ to the node $P3$ has to be further evaluated. In other words, in an example situation, an additional application component $C3$ is to be placed between the application components $C1$ and $C2$. In view of the fact that the link $l_{1,2}$ is operated in the nonlinear region, it may be beneficial to place the additional application component $C3$ on a different node $P3$.

If there is no knowledge about the resource situation of any neighbour node of node $P1$, the new node $P3$ could be selected randomly, otherwise $P3$ could be selected as the best known choice of the RM of node $P1$, e.g. using the local resource graph and the link capacity / link cost and processor capacity / processor cost information stored therein. The RM then evaluates the total cost difference before and after re-mapping of the additional application component $C3$ from node $P1$ to node $P3$ using the total cost

$$\text{expression } Cost_{total} = \sum_{i,j} \Phi(l_{i,j}/cap_{i,j}) + \sum_{k} \Psi(p_k).$$

In the following, it is assumed that the processing cost function $\Psi(p)$ is a linear function so that there is no benefit in moving components between $P1$, $P2$ and $P3$. In other words, it may be assumed that the processing cost $\Psi(p)$ for an application component is the same on any of the nodes $P1$, $P2$ and $P3$. As such, the processing cost $\Psi(p)$ may be ignored in the component placement process, as long as it is ensured that the available processing capacity at a node is sufficient to cope with the new application component. Therefore, the total cost expression only depends on the total link cost which is the sum of the individual link costs of the links between the three components $C1$, $C2$ and $C3$ under consideration. Reference is made to the cases illustrated in Fig. 6 (right hand side).

a) Cost before 3rd component $C3$ is placed (see Fig. 6, right hand side (rhs), case a):

$$Cost_{total,a1} = \Phi(l_{1,2}/cap_{1,2}) + \Phi(l_{2,3}/cap_{2,3}) + \Phi(l_{1,3}/cap_{1,3}) = a_1 + a_2 + a_3$$

It is noted that the above equation considers all loads between all components on all links including the links $l_{1,3}$ and $l_{2,3}$. These components and the links are not shown in case a) of Fig. 6. The cost function calculates relative link loads.

b) Cost difference $\Delta Cost_{total,b}$ with a 3rd component added to nodes $P1$ or $P2$:

$$\Delta Cost_{total,b} = a_1 + a_2 + a_3 - (a_1 + a_2 + a_3) = 0$$

Hereby, it is assumed that the link load $l_{1,2}$ has not changed (as it was assumed that the egress of C1 is equal to the egress load of C3.).

c) Cost difference $\Delta Cost_{total,c}$ with 3rd component moved to node $P3$:

$$\Delta Cost_{total,c} = \Phi(l'_{1,2}/cap_{1,2}) + \Phi(l'_{2,3}/cap_{2,3}) + \Phi(l'_{1,3}/cap_{1,3}) -$$

$$(\Phi(l_{1,2}/cap_{1,2}) + \Phi(l_{2,3}/cap_{2,3}) + \Phi(l_{1,3}/cap_{1,3})) = a'_1 + a'_2 + a'_3 - (a_1 + a_2 + a_3) =$$

$$(a'_1 - a_1) + (a'_2 - a_2) + (a'_3 - a_3)$$

For consistency reasons $a_1$, $a_2$ and $a_3$ are the relative costs of the cases a and b.

Then migrating C3 to P3 leads to:

- $(a'_2 - a_2) > 0$ and
- $(a'_3 - a_3) > 0.$

This increases the cost and this must be overcompensated by

- $(a'_1 - a_1) < 0.$ (the new relative link cost $a'_1$ must be smaller than the previous link cost $a_1$.

That is, the total cost difference $\Delta Cost_{total,c}$ is negative (so that there is a cost benefit) if the link cost reduction $(a'_1 - a_1)$ on $l_{1,2}$ is not compensated by a link cost increase $(a'_2 - a_2)$ on $l_{2,3}$ and $(a'_3 - a_3)$ on $l_{1,3}$ to processing node P3.

In cases a), b) and c) of Fig. 6, the link cost benefit achieved by the deployment location of a third component depends on the parameters given by the details of the link cost function $\Phi(l)$. ISPs (Internet Service Providers) usually model congestion cost with a convex increasing function of the link load (as shown in Fig. 7). The exact shape of the function $\Phi(l)$ is typically not important, and a piecewise linear cost function may be assumed as in Fig. 7. The idea behind $\Phi(l)$ is that it is cheap to send traffic flows over a link with a small utilisation. As the link utilisation approaches 100%, i.e. as the link utilization increases, the sending of traffic flows becomes more expensive. By way of example, the link may become more sensitive to traffic bursts in case of high link utilization. If the utilisation goes beyond 90% ,this results in heavy penalisation, and when the utilisation approaches 100% the penalty gets so high that it become quasi impossible to assign additional traffic flows to the link.

It should be noted that in addition to link utilization and link cost, latency aspects of the link may be taken into account. By way of example, the local resource graph of a node 101 may comprise information regarding a latency of the links towards other nodes 101. Furthermore, the node 101 may have information regarding a maximum allowed latency for a link between application components. As such, the RM of a node 101 may be configured to ensure that the latency of a selected link does not exceed a maximum allowed latency, when placing the application components. In an embodiment, the latency aspect may be taken into account within the link cost function. Furthermore, a node may be adapted to determine that a maximum allowed latency for a link between components is exceeded and take this event as a triggering event for a re-mapping of application components.

The RM function of a node 101 (e.g. node *P1*) may evaluate the cost function of the links when mapping application components 703. In particular, the RM has to decide whether the initiation of a new media component 703 can offer relief with respect to the looming overload situation of the link $l_{1,2}$. A cost benefit $\Delta Cost_{total}$ can be achieved through re-mapping of the component *C3* co-located at *C1* if the following condition is true for at least one node in the neighbourhood $P_k$ of *P1* and/or P2: $\Delta\Phi(l_1, l_k) + \Delta\Phi(l_k,l_2) < \Delta\Phi(l_1,l_2)$ for at least one node *k* in the network vicinity of *P1* and/or *P2.*

The RM can perform a beneficial (with respect to cost) re-mapping decision for component *C3* by taking into account the current gradient of its convex link cost curve. The probability of a beneficial re-mapping decision increases with the current gradient. As such, the RM may be configured to make a decision to re-map if the current gradient exceeds a pre-determined gradient threshold. Typically, the gradient function is a multi-dimensional gradient function, as there are multiple $P_k$ each with its individual gradient.

In view of the example link cost function 403 shown in Fig. 7 a relatively high gradient of the cost function can occur whenever the component re-mapping results in moving from a segment of curve 403 with high ascending slope to a segment with lower ascending slope, even if now the costs for two links (i.e. a link from and a link to the new component) have to be taken into account. For the particular convex piece-wise linear cost function of Fig. 7 the relation $\Phi\Delta(l_1, l_k) + \Delta\Phi(l_k, l_2) < \Delta\Phi(l_1, l_2)$ is true for all *l* with *l* > 0.16, so that for the case of $l_{1,2} > 0.16$ re-mapping of the component would be beneficial, if a linear processing cost function for the processing cost and a cost function according to Fig. 7 for the link cost is assumed. However, the specific piece-wise linearity property of the cost function $\Phi(l)$ is mentioned as an example only and is not required for the described method. Any convex cost function (i.e., continuous function whose value at the midpoint of every interval in its domain does not exceed the arithmetic mean of its values at the ends of the interval) can be used for the proposed method.

In the previous paragraphs a specific case for adding a new component into an application graph has been described. Furthermore, a decision function for placing the new component has been described. In the following, this specific case will be extended. An application graph (as shown e.g. in Fig. 4) typically comprises a large number of interlinked components 703, whereby groups of these components are located on different nodes 101 of the MC 100. Fig. 8(a) shows an example of a chain of components 703 (represented by dots and Greek letters) belonging to an application graph. All these components 703 ($\alpha,\beta,\chi,\varepsilon,\phi,\gamma,\eta$) are supposed to be located initially on one single node 101. The arrows between these components represent the initial link load or cost between the components (in accordance to the force in a rubber band model). There are small link costs as the cost "a" towards component "$\alpha$" (thin arrow), and large link costs as the cost "d" between the components "$\chi$" and "$\varepsilon$" (thick arrow). In an example, it is assumed that the link cost relation is: a<c<b<<d<=1 (100%).

A new component "$\delta$" is inserted into the component chain (see Fig. 8(b)). The new component "$\delta$" communicates with its neighbouring components "$\chi$" and "$\varepsilon$" with the load "d". If it is required to move the new component "$\delta$" to another node, the added link cost is relatively high because of the strongly increasing cost gradient introduced by the convexity of the cost function. This is illustrated in Fig. 8(c) where the impact of the increased load "d" on the cost function of the link from the present node to a neighbouring node is depicted. In view of this, the mapping function may start an optimising algorithm with the identification of links between components, where the component chain can be cut advantageously. A criterion is the low link load between components.

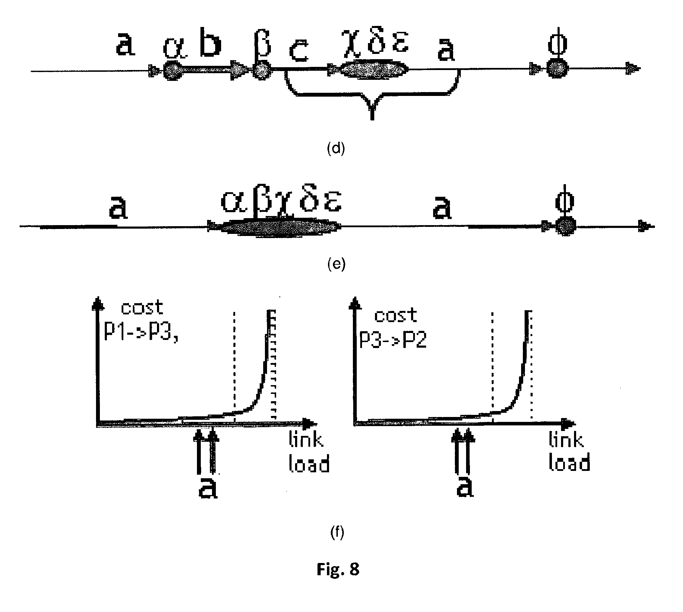

Starting from the new component "$\delta$", the algorithm identifies a link between the component "$\varepsilon$" and the component "$\phi$" which has a relatively low link load "a". In the opposite chain direction starting from the new component "$\delta$", the algorithm identifies a link "c" (between the components "$\beta$" and "$\chi$" with relatively low link cost. The algorithm then identifies and groups components "$\chi$", "$\delta$", "$\varepsilon$" as a cluster component ($\chi\delta\varepsilon$) shown in Fig. 8(d).

If the cluster component ($\chi\delta\varepsilon$) shall be moved to another node, link loads "c" and "a" (see Fig. 8(d)) have to be taken into account. These link loads lead to a much lower link cost as the previous link cost produced by component "$\delta$" alone. Depending on the decision criteria, the algorithm can proceed with the component mapping strategy until a maximum total link cost benefit $\Delta\Phi(l)$ is achieved. By way of example, a cluster component ($\alpha\beta\chi\delta\varepsilon$) may be identified with link load "a" in both directions (see Fig. 8(e)). It can be seen in Fig. 8(f) that the link load "a" ensures that the link costs on the links from a first node *P1* to a node *P3* and a node *P2* can be maintained in the linear region. Hence, by moving the entire cluster component ($\alpha\beta\chi\delta\varepsilon$) to another node with sufficient processing resources, the achievable link cost benefit is larger than the cost benefit which could be achieved by moving only the single component "$\delta$".

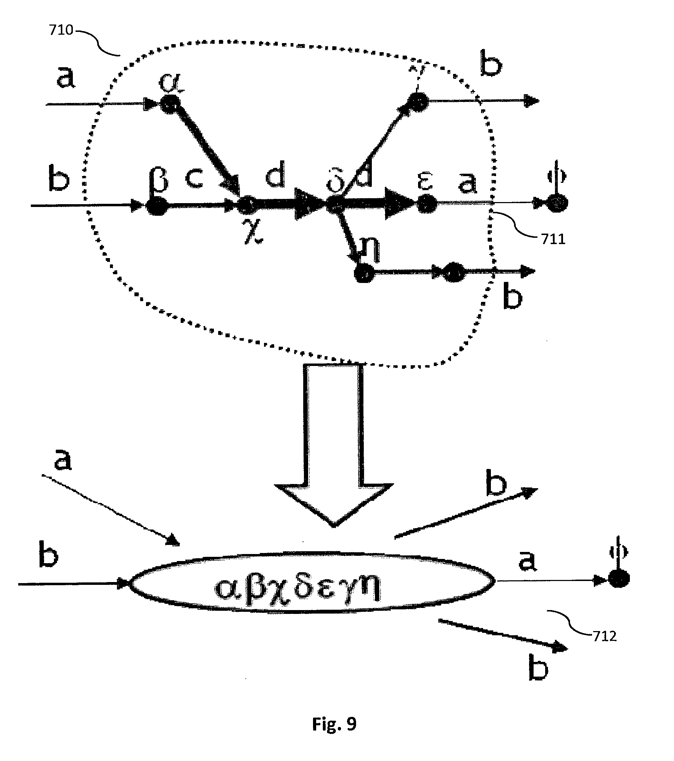

The same algorithm can be applied if the application graph is not a component chain (as illustrated in Fig. 8) but a graph where components can have more than two adjacent processing components (as shown in Fig. 9). The application graph 710 of Fig. 7 provides a corresponding example, again supposing that a single component "$\delta$" is inserted into the application graph. If the component "$\delta$" cannot be handled by the current node *P1,* e.g. due to limitations of the processing resources at the current node *P1,* the RM function of node *P1* tries to identify other nodes (e.g. a node *P3*) where the new component "$\delta$" can be placed. In view of the high loads on links to and from the component "$\delta$", the RM function of node *P1* first tries to identify a component cluster which is likely to generate less link costs than the component "$\delta$" alone. The dashed region 711 comprises those components which the algorithm described above has identified as a component cluster. Due to the low link costs of the external cluster links ("a","b",..), the cluster 712 can advantageously be described employing a new cluster component list and moved in a single step to another node (e.g. *P3),* thereby preserving the link costs between the involved nodes in a linear segment of their cost graphs.

In other words, the Resource Management function of a node 101 can be triggered by different events. One event is the insertion of a new component into an existing component graph. The RM can use this new component as a focal point for querying neighbour components. From a pure link cost aspect, the querying process in direction of a component chain may stop if the next following interconnection requires cheap link costs (corresponds to a rubber band model with weak elastic force). The graph in Fig. 9 provides an example which starts from the new component "$\delta$". The dashed circle 711 surrounds those components which can be viewed as logical cluster 712. Due to the low link cost arms ("a","b",..) to this cluster, the cluster 712 can advantageously be moved (in a single step) to another node preserving the link costs of the involved nodes in a linear segment of their cost graphs.

The mapping process / resource management process may treat this cluster component 712 as a single administrative unit by attributing this unit with a unit processing load assigned with the summative processing load of the whole cluster, and with the link load assigned with the summative link loads of the whole cluster. Different events may lead to a re-evaluation of the cluster 712:

a) A re-evaluation of a cluster 712 may be required e.g. upon the release of one of its constituent components 703.
b) A failure of a cluster-internal link could result in the need to re-evaluate the clustering, e.g. with respect to the inclusion of new cluster members for protection.
c) A strong increase of processing load on one of the constituent components of a cluster could also result in the need to re-organize the mapping of clusters to the available processing nodes.

After evaluating the above equations and subsequent to grouping the components to clusters following the method outlined above, the RM can select one of these component clusters to perform cluster re-mapping. For this purpose the RM selects a component cluster which has the highest contributions to the cluster link load for the link under investigation.

In the previous sections it has been described how the RM of a node 101 controls component and cluster mapping based on locally available information about the link load of components and the associated link costs. In addition, the RM can optimise or improve the mapping by taking into account available information on the local processing load. Depending on this information the RM can perform the following decisions for selecting the most suitable component cluster:

- High node processing load: select the component cluster or component out of the cluster group which is attributed with a high processing load because this has the highest impact on node processing load reduction. This component cluster or component may be selected for re-mapping.
- Low-medium node processing load: select a component cluster out of the cluster group with a low or the lowest processing load. This ensures a high probability for the receiving node being able to take over the offered component cluster without risking an overload situation on the new node.

In the present document, an architecture for a network and corresponding computing devices (nodes) for cloud computing have been described. The described architecture allows for the implementation of a decentralized application component placement scheme, which allows components of applications to be placed at appropriate nodes within a computing cloud. Furthermore, a component placement algorithm has been described which allows to place application components in a decentralized manner while at the same time reducing the overall link (i.e. transmission) and/or processing cost.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

**1.** A first computing device (101), wherein

- the first computing device (101) is adapted to host a first component (703) of an application (700);
- the first component (703) sends data according to a first load via a first communication link (401) to a second component (703) of the application (700), hosted on a second computing device (101);
- the first computing device (101) is adapted to receive a component placement request for a third component (703) of the application (700);
- the third component (703) receives data from the first component (703) according to an ingress load;
- the third component (703) sends data to the second component (703) according to an egress load;
- the computing device (101) comprises a local resource list (601);
- the local resource list (601) comprises information indicative of link load cost functions on the first communication link (401) and on at least one neighbour communication link (401) to at least one neighbour computing device (101) positioned in a neighbourhood of the first computing device (101);
- the first computing device (101) is adapted to determine whether to place the third component (703) on the first computing device (101) or whether to forward the component placement request to the second computing device (101) or to the at least one neighbour computing device (101), based on the first load, the ingress load, the egress load and the link load cost functions on the first communication link (401) and on the at least one neighbour communication link (401).

2. The first computing device (101) of claim 1, wherein

- the link load cost functions are indicative of a cost of transmission resources of a link as a function of link utilization; and/or
- the link load cost functions are convex functions comprising a piece-wise linear or near-linear region for link utilization below a utilization threshold and a nonlinear region for link utilization above the utilization threshold.

3. The first computing device (101) of any previous claim, wherein the first computing device (101) is adapted to

- determine a first cost of the first communication link subject to the first load;
- determine a second cost of the first communication link subject to the egress load; and
- place the third component on the first computing device (101) if the second cost is smaller than or equal to the first cost.

4. The first computing device (101) of claim 3, wherein the first computing device (101) is adapted to

- determine whether the first cost of the first communication link is above a remapping threshold;
- if the first cost is above the remapping threshold, determine the costs of the first communication link (401) and of the at least one neighbour communication link (401) subject to the ingress load; and
- forward the component placement request to the second computing device (101) or to the at least one neighbour computing device (101), based on the determined costs.

5. The first computing device (101) of claim 4, wherein the first computing device (101) is adapted to

- send an indication of the first cost along with the component placement request to the at least one neighbour computing device (101).

6. The first computing device (101) of any previous claim, wherein the first computing device (101) is adapted to

- determine a gradient of the link load cost function (403) of the first communication link (401);
- determine whether to place the third component (703) on the first computing device (101) or whether to forward the component placement request to the second computing device (101) or to the at least one neighbour computing device (101), based on the determined gradient.

7. The first computing device (101) of any previous claim, wherein

- the local resource list (601) comprises information indicative of processing cost functions for processing resources on the first computing device (101), the second computing device (101) and the at least one neighbour computing device (101);
- the third component (703) has a predetermined processing resources demand;
- the first computing device (101) is adapted to determine whether to place the third component (703) on the first computing device (101) or whether to forward the component placement request to the second computing device (101) or to the at least one neighbour computing device (101), also based on the predetermined processing resources demand and the processing cost functions.

8. The first computing device (101) of claim 7, wherein the first computing device (101) is adapted to determine whether the first computing device (101), the second computing device (101) and the at least one neighbour computing device (101) have spare processing resources to meet the predetermined processing resources demand.

9. The first computing device (101) of any of claims 7 to 8, wherein the first computing device (101) is adapted to

   - receive information regarding the processing cost functions for processing resources and/or information regarding specific processing resources of the at least one neighbour computing device (101) from the at least one neighbour computing device (101).

10. The first computing device (101) of any previous claim, wherein

   - the first computing device (101) is adapted to host a plurality of components (703) of the application (700);
   - the plurality of components (703) of the application (700) exchange data among each other according to different loads;
   - the plurality of components (703) of the application (700) exchange data with remote components (703) of the application (700) on remote computing devices (101) according to an external load; and
   - the first computing device (101) is adapted to determine a subgroup (712) of the plurality of components (703), such that the load of the data exchanged between the subgroup (712) and other components of the applications is lower than the external load.

11. The first computing device (101) of claim 10, wherein the first computing device (101) is adapted to

   - send one or more placement requests regarding respective one or more components of the plurality of components which are not part of the subgroup (712) to respective one or more of the remote computing devices (101).

12. The first computing device (101) of any of claims 10 to 11, wherein the first computing device (101) is adapted to

   - send a combined placement request regarding the subgroup (712) of components (703) to a remote computing device (101); wherein the subgroup (712) comprises more than one component (703).

13. The first computing device (101) of any previous claim, wherein

   - the first computing device (101) is positioned in a first topological area (102);
   - the first computing device (101) comprises a topological list (602) indicating a plurality of reference computing devices positioned in a plurality of topological areas (102) other than the first topological area (102), respectively;
   - the first computing device (101) is adapted to

      - determine, based on the topological list (602), if the third component (703) of the application (700) is to be placed in the first topological area (102) or in one of the plurality of topological areas (102) other than the first topological area (102);
      - if it is determined that the third component (703) of the application is to be placed in one of the plurality of topological areas other than the first topological area, pass the component placement request to the reference computing device of the respective topological area of the plurality of topological areas other than the first topological area; and
      - if it is determined that the third component (703) of the application is to be placed in the first topological area (102) select the at least one neighbour computing device (101) from the first topological area (102).

14. A distributed network (100), the network comprising

   - a first computing device (101) according to any of claims 1 to 13;
   - a second computing device (101) according to any of claims 1 to 13 and
   - at least one neighbour computing device (101) positioned in a neighbourhood of the first computing device (101) according to any of claims 1 to 13.

**15.** A method for placing a component (703) of an application (700) onto a computing device (101), the method comprising

- hosting a first component (703) of an application (700) on a first computing device (101);
- sending data according to a first load via a first communication link (401) to a second component (703) of the application (700), hosted on a second computing device (101);
- receiving a component placement request for a third component (703) of the application (700) at the first computing device (101); wherein the third component (703) receives data from the first component (703) according to an ingress load; wherein the third component (703) sends data to the second component (703) according to an egress load;
- determining whether to place the third component (703) on the first computing device (101) or whether to forward the component placement request to the second computing device (101) or to at least one neighbour computing device (101) of the first computing device (101), based on the first load, the ingress load, the egress load and based on link load cost functions on the first communication link (401) and on at least one neighbour communication link (401) to the at least one neighbour computing device (101).

**Patentansprüche**

**1.** Erste Rechenvorrichtung (101) wobei

- die erste Rechenvorrichtung (101) dazu ausgelegt ist, eine erste Komponente (703) einer Anwendung (700) zu hosten;
- die erste Komponente (703) Daten gemäß einer ersten Last über eine erste Kommunikationsverbindung an eine zweite Komponente (703) der Anwendung (700), welche auf einer zweiten Rechenvorrichtung (101) gehostet ist, sendet;
- die erste Rechenvorrichtung (101) dazu ausgelegt ist, eine Komponentenpositionierungsanforderung für eine dritte Komponente (703) der Anwendung (700) zu empfangen;
- die dritte Komponente (703) Daten von der ersten Komponente (703) gemäß einer Eingangslast empfängt;
- die dritte Komponente (703) Daten an die zweite Komponente (703) gemäß einer Ausgangslast sendet;
- die Rechenvorrichtung (101) eine lokale Ressourcenliste (601) umfasst;
- die lokale Ressourcenliste (601) Informationen, die für Verbindungslast-Kostenfunktionen auf der ersten Kommunikationsverbindung (401) und auf mindestens einer benachbarten Kommunikationsverbindung (401) zu mindestens einer benachbarten Rechenvorrichtung (101), welche in einer Nachbarschaft der ersten Rechenvorrichtung (101) angeordnet ist, indikativ sind, enthält;
- die erste Rechenvorrichtung (101) dazu ausgelegt ist, auf der Basis der ersten Last, der Eingangslast, der Ausgangslast und der Verbindungslast-Kostenfunktionen auf der ersten Kommunikationsverbindung (401) und auf der mindestens einen benachbarten Kommunikationsverbindung (401) zu ermitteln, ob die dritte Komponente (703) auf der ersten Rechenvorrichtung (101) positioniert werden soll, oder ob die Komponentenpositionierungsanforderung an die zweite Rechenvorrichtung (101) oder an die mindestens eine benachbarte Rechenvorrichtung (101) weitergeleitet werden soll.

**2.** Erste Rechenvorrichtung (101) nach Anspruch 1, wobei

- Die Verbindungslast-Kostenfunktionen für die Kosten von Übertragungsressourcen einer Verbindung in Abhängigkeit von der Verbindungsnutzung indikativ sind; und/oder
- die Verbindungslast-Kostenfunktionen konvexe Funktionen sind, welche einen stückweise linearen oder nichtlinearen Bereich für eine Verbindungsnutzung unterhalb eines Nutzungsgrenzwerts und einen nichtlinearen Bereich für eine Verbindungsnutzung oberhalb des Nutzungsgrenzwerts umfassen.

**3.** Erste Rechenvorrichtung (101) nach einem beliebigen der vorstehenden Ansprüche, wobei die erste Rechenvorrichtung (101) für Folgendes ausgelegt ist:

- Ermitteln von ersten Kosten der ersten Kommunikationsverbindung, welche von der ersten Last beansprucht wird;
- Ermitteln von zweiten Kosten der ersten Kommunikationsverbindung, welche von der Ausgangslast beansprucht wird; und
- Positionieren der dritten Komponente auf der ersten Rechenvorrichtung (101), wenn die zweiten Kosten niedriger als die oder gleich den ersten Kosten sind.

**4.** Erste Rechenvorrichtung (101) nach Anspruch 3, wobei die erste Rechenvorrichtung (101) für Folgendes ausgelegt ist:

- Ermitteln, ob die ersten Kosten der ersten Kommunikationsverbindung einen Remapping-Grenzwert überschreiten;
- wenn die ersten Kosten den Remapping-Grenzwert überschreiten, Ermitteln der Kosten der ersten Kommunikationsverbindung (401) und der mindestens einen benachbarten Kommunikationsverbindung (401), welche von der Eingangslast beansprucht wird; und
- Weiterleiten der Komponentenpositionierungsanforderung an die zweite Rechenvorrichtung (101) oder an die mindestens eine benachbarte Rechenvorrichtung (101) auf der Basis der ermittelten Kosten.

**5.** Erste Rechenvorrichtung (101) nach Anspruch 4, wobei die erste Rechenvorrichtung (101) für Folgendes ausgelegt ist:

- Senden einer Angabe der ersten Kosten zusammen mit der Komponentenpositionierungsanforderung an die mindestens eine benachbarte Rechenvorrichtung (101).

**6.** Erste Rechenvorrichtung (101) nach einem beliebigen der vorstehenden Ansprüche, wobei die erste Rechenvorrichtung (101) für Folgendes ausgelegt ist:

- Ermitteln eines Gradienten der Verbindungslast-Kostenfunktion (403) der ersten Kommunikationsverbindung (401);
- Ermitteln, auf der Basis des ermittelten Gradienten, ob die dritte Komponente (703) auf der ersten Rechenvorrichtung (101) positioniert werden soll, oder ob die Komponentenpositionierungsanforderung an die zweite Rechenvorrichtung (101) oder an die mindestens eine benachbarte Vorrichtung (101) weiterzuleiten ist.

**7.** Erste Rechenvorrichtung (101) nach einem beliebigen der vorstehenden Ansprüche, wobei

- die lokale Ressourcenliste (601) Informationen umfasst, welche für Verarbeitungskostenfunktionen für Verarbeitungsressourcen auf der ersten Rechenvorrichtung (101), der zweiten Rechenvorrichtung (101) und der mindestens einen benachbarten Rechenvorrichtung (101) indikativ sind;
- die dritte Komponente (703) einen vorbestimmten Verarbeitungsressourcenbedarf aufweist;
- die erste Rechenvorrichtung (101) dazu ausgelegt ist, ebenfalls auf der Basis des vorbestimmten Verarbeitungsressourcenbedarfs und der Verarbeitungskostenfunktionen zu ermitteln, ob die dritte Komponente (703) auf der ersten Rechenvorrichtung (101) positioniert werden soll, oder ob die Komponentenpositionierungsanforderung an die zweite Rechenvorrichtung (101) oder an die mindestens eine benachbarte Vorrichtung (101) weiterzuleiten ist.

**8.** Erste Rechenvorrichtung (101) nach Anspruch 7, wobei die erste Rechenvorrichtung (101) dazu ausgelegt ist, zu ermitteln, ob die erste Rechenvorrichtung (101), die zweite Rechenvorrichtung (101) und die mindestens eine benachbarte Rechenvorrichtung (101) über freie Verarbeitungsressourcen verfügen, um den vorbestimmten Bedarf an Verarbeitungsressourcen zu erfüllen.

**9.** Erste Rechenvorrichtung (101) nach einem beliebigen der Ansprüche 7 bis 8, wobei die erste Rechenvorrichtung (101) für Folgendes ausgelegt ist:

- Empfangen von Informationen in Bezug auf Verarbeitungskostenfunktionen für Verarbeitungsressourcen und/oder Informationen in Bezug auf spezifische Verarbeitungsressourcen der mindestens einen benachbarten Rechenvorrichtung (101) von der besagten mindestens einen benachbarten Rechenvorrichtung (101).

**10.** Erste Rechenvorrichtung (101) nach einem beliebigen der vorstehenden Ansprüche, wobei

- die erste Verarbeitungsvorrichtung (101) dazu ausgelegt ist, eine Vielzahl von Komponenten (703) der Anwendung (700) zu hosten;
- die Vielzahl von Komponenten (703) der Anwendung (700) gemäß den unterschiedlichen Lasten Daten untereinander austauschen;
- die Vielzahl von Komponenten (703) der Anwendung (700) gemäß einer externen Last Daten mit entfernt angeordneten Komponenten (703) der Anwendung (700) auf entfernt angeordneten Rechenvorrichtungen (101) austauschen; und

- die erste Rechenvorrichtung (101) dazu ausgelegt ist, eine Teilgruppe (712) der Vielzahl von Komponenten (703) derart zu bestimmen, dass die Last der zwischen der Teilgruppe (712) und anderen Komponenten der Anwendungen ausgetauschten Daten niedriger als die externe Last ist.

11. Erste Rechenvorrichtung (101) nach Anspruch 10, wobei die erste Rechenvorrichtung (101) für Folgendes ausgelegt ist:

- Senden einer oder mehrerer Positionierungsanforderungen in Bezug auf die jeweilige eine oder jeweilige mehrere Komponenten der Vielzahl von Komponenten, die nicht der Teilgruppe (712) angehören, an die jeweilige eine oder jeweilige mehrere der entfernt angeordneten Rechenvorrichtungen (101).

12. Erste Rechenvorrichtung (101) nach einem beliebigen der Ansprüche 10 bis 11, wobei die erste Rechenvorrichtung (101) für Folgendes ausgelegt ist:

- Senden einer kombinierten Positionierungsanforderung in Bezug auf die Teilgruppe (712) von Komponenten (703) an eine entfernt angeordnete Rechenvorrichtung (101); wobei die Teilgruppe (712) mehr als eine Komponente (703) umfasst.

13. Erste Rechenvorrichtung (101) nach einem beliebigen der vorstehenden Ansprüche, wobei

- die erste Rechenvorrichtung (101) in einem ersten topologischen Bereich (102) angeordnet ist;
- die erste Rechenvorrichtung (101) eine topologische Liste (602) umfasst, welche eine Vielzahl von Referenz-Rechenvorrichtungen, die jeweils in einer Vielzahl von topologischen Bereichen (102) außerhalb des ersten topologischen Bereichs (102) angeordnet sind, umfasst;
- die erste Rechenvorrichtung (101) ebenfalls für Folgendes ausgelegt ist:

- Ermitteln, auf der Basis der topologischen Liste (602), ob die dritte Komponente (703) der Anwendung (700) in dem ersten topologischen Bereich (102) oder in einem der Vielzahl von topologischen Bereichen (102) außerhalb des ersten topologischen Bereichs (102) positioniert werden soll;
- wenn ermittelt wird, dass die dritte Komponente (703) der Anwendung in einem der Vielzahl von topologischen Bereichen außerhalb des ersten topologischen Bereiches positioniert werden soll, Weiterleiten der Komponentenpositionierungsanforderung an die Referenz-Rechenvorrichtung des jeweiligen topologischen Bereiches der Vielzahl von topologischen Bereichen außerhalb des ersten topologischen Bereichs; und
- wenn ermittelt wird, dass die dritte Komponente (703) der Anwendung in dem ersten topologischen Bereich (102) positioniert werden soll, Auswählen der mindestens einen benachbarten Rechenvorrichtung (101) aus dem ersten topologischen Bereich (102).

14. Verteiltes Netzwerk (100), wobei das Netzwerk umfasst:

- Eine erste Rechenvorrichtung (101) gemäß einem beliebigen der Ansprüche 1 bis 13;
- eine zweite Rechenvorrichtung (101) gemäß einem beliebigen der Ansprüche 1 bis 13; und
- mindestens eine in einer Nachbarschaft der ersten Rechenvorrichtung (101) angeordnete benachbarte Rechenvorrichtung (101) gemäß einem beliebigen der Ansprüche 1 bis 13.

15. Verfahren zum Positionieren einer Komponente (703) einer Anwendung (700) auf einer Rechenvorrichtung (101), wobei das Verfahren umfasst:

- Hosten einer ersten Komponente (703) einer Anwendung (700) auf einer ersten Rechenvorrichtung (101);
- Senden von Daten gemäß einer ersten Last über eine erste Kommunikationsverbindung (401) an eine zweite Komponente (703) der Anwendung (700), welche auf einer zweiten Rechenvorrichtung (101) gehostet ist;
- Empfangen einer Komponentenpositionierungsanforderung für eine dritte Komponente (703) der Anwendung (700) an der ersten Rechenvorrichtung (101); wobei die dritte Komponente (703) Daten von der ersten Komponente (703) gemäß einer Eingangslast empfängt; wobei die dritte Komponente (703) Daten an die zweite Komponente (703) gemäß einer Ausgangslast sendet;
- Ermitteln, auf der Basis der ersten Last, der Eingangslast, der Ausgangslast und auf der Basis der Verbindungslast-Kostenfunktionen auf der ersten Kommunikationsverbindung (401) und auf der mindestens einen benachbarten Kommunikationsverbindung (401) zu der mindestens einen benachbarten Rechenvorrichtung (101), ob die dritte Komponente (703) auf der ersten Rechenvorrichtung (101) positioniert werden soll, oder ob die Komponentenpositionierungsanforderung an die zweite Rechenvorrichtung (101) oder an mindestens eine benachbarte Rechenvorrichtung (101) der ersten Rechenvorrichtung (101) weitergeleitet werden soll.

**Revendications**

1.  Premier dispositif informatique (101), dans lequel

    - le premier dispositif informatique (101) est adapté pour héberger une première composante (703) d'une application (700) ;
    - la première composante (703) envoie des données conformément à une première charge par l'intermédiaire d'une première liaison de communication (401) à une deuxième composante (703) de l'application (700), hébergée sur un deuxième dispositif informatique (101) ;
    - le premier dispositif informatique (101) est adapté pour recevoir une requête de placement de composante pour une troisième composante (703) de l'application (700) ;
    - la troisième composante (703) reçoit des données provenant de la première composante (703) conformément à une charge d'entrée ;
    - la troisième composante (703) envoie des données à la deuxième composante (703) conformément à une charge de sortie ;
    - le dispositif informatique (101) comprend une liste de ressources locales (601) ;
    - la liste de ressources locales (601) comprend des informations indiquant des fonctions de coût de charge de liaison sur la première liaison de communication (401) et sur au moins une liaison de communication voisine (401) vers au moins un dispositif informatique voisin (101) positionné dans un voisinage du premier dispositif informatique (101) ;
    - la premier dispositif informatique (101) est adapté pour déterminer s'il faut placer la troisième composante (703) sur le premier dispositif informatique (101) ou s'il faut transférer la requête de placement de composante vers le deuxième dispositif informatique (101) ou vers l'au moins un dispositif informatique voisin (101), sur la base de la première charge, de la charge d'entrée, de la charge de sortie et des fonctions de coût de charge de liaison sur la première liaison de communication (401) et sur l'au moins une liaison de communication voisine (401).

2.  Premier dispositif informatique (101) selon la revendication 1, dans lequel

    - les fonctions de coût de charge de liaison indiquent un coût de ressources de transmission d'une liaison en fonction de l'utilisation de liaison ; et/ou
    - les fonctions de coût de charge de liaison sont des fonctions convexes comprenant une région linaire ou non-linéaire par morceaux pour l'utilisation de liaison en dessous d'un seuil d'utilisation et une région non-linéaire pour l'utilisation de liaison au-dessus du seuil d'utilisation.

3.  Premier dispositif informatique (101) selon l'une quelconque des revendications précédentes, le premier dispositif informatique (101) étant adapté pour

    - déterminer un premier coût de la première liaison de communication soumise à la première charge ;
    - déterminer un deuxième coût de la première liaison de communication soumise à la charge de sortie ; et
    - placer la troisième composante sur le premier dispositif informatique (101) si le deuxième coût est inférieur ou égal au premier coût.

4.  Premier dispositif informatique (101) selon la revendication 3, le premier dispositif informatique (101) étant adapté pour

    - déterminer si le premier coût de la première liaison de communication est supérieur à un seuil de remappage ;
    - si le premier coût est supérieur au seuil de remappage, déterminer les coûts de la première liaison de communication (401) et de l'au moins une liaison de communication voisine (401) soumise à la charge d'entrée ; et
    - transférer la requête de placement de composante vers le deuxième dispositif informatique (101) ou vers l'au moins un dispositif informatique voisin (101), sur la base des coûts déterminés.

**5.** Premier dispositif informatique (101) selon la revendication 4, le premier dispositif informatique (101) étant adapté pour

- envoyer une indication du premier coût avec la requête de placement de composante à l'au moins un dispositif informatique voisin (101).

**6.** Premier dispositif informatique (101) selon l'une quelconque des revendications précédentes, le premier dispositif informatique (101) étant adapté pour

- déterminer un gradient de la fonction de coût de charge de liaison (403) de la première liaison de communication (401) ;
- déterminer s'il faut placer la troisième composante (703) sur le premier dispositif informatique (101) ou s'il faut transférer la requête de placement de composante vers le deuxième dispositif informatique (101) ou vers l'au moins un dispositif informatique voisin (101), sur la base du gradient déterminé.

**7.** Premier dispositif informatique (101) selon l'une quelconque des revendications précédentes, dans lequel

- la liste de ressources locales (601) comprend des informations indiquant des fonctions de coût de traitement pour des ressources de traitement sur le premier dispositif informatique (101), le deuxième dispositif informatique (101) et l'au moins un dispositif informatique voisin (101) ;
- la troisième composante (703) a une demande de ressources de traitement prédéterminée ;
- le premier dispositif informatique (101) est adapté pour déterminer s'il faut placer la troisième composante (703) sur le premier dispositif informatique (101) ou s'il faut transférer la requête de placement de composante vers le deuxième dispositif informatique (101) ou vers l'au moins un dispositif informatique voisin (101), également sur la base de la demande de ressources de traitement prédéterminée et des fonctions de coût de traitement.

**8.** Premier dispositif informatique (101) selon la revendication 7, dans lequel le premier dispositif informatique (101) est adapté pour déterminer si le premier dispositif informatique (101), le deuxième dispositif informatique (101) et l'au moins un dispositif informatique voisin (101) ont des ressources de traitement de réserve pour répondre à la demande de ressources de traitement prédéterminée.

**9.** Premier dispositif informatique (101) selon l'une quelconque des revendications 7 et 8, le premier dispositif informatique (101) étant adapté pour

- recevoir des informations concernant les fonctions de coût de traitement pour des ressources de traitement et/ou des informations concernant des ressources de traitement spécifiques de l'au moins un dispositif informatique voisin (101) à partir de l'au moins un dispositif informatique voisin (101).

**10.** Premier dispositif informatique (101) selon l'une quelconque des revendications précédentes, dans lequel

- le premier dispositif informatique (101) est adapté pour héberger une pluralité de composantes (703) de l'application (700) ;
- la pluralité de composantes (703) de l'application (700) échange des données entre elles conformément à des charges différentes ;
- la pluralité de composantes (703) de l'application (700) échange des données avec des composantes distantes (703) de l'application (700) sur des dispositifs informatiques distants (101) conformément à une charge externe ; et
- le premier dispositif informatique (101) est adapté pour déterminer un sous-groupe (712) de la pluralité de composantes (703), de sorte que la charge des données échangées entre le sous-groupe (712) et d'autres composantes des applications est inférieure à la charge externe.

**11.** Premier dispositif informatique (101) selon la revendication 10, le premier dispositif informatique (101) étant adapté pour

- envoyer une ou plusieurs requêtes de placement concernant une ou plusieurs composantes respectives parmi la pluralité de composantes qui ne font pas partie du sous-groupe (712) à un ou plusieurs des dispositifs informatiques distants respectifs (101).

**12.** Premier dispositif informatique (101) selon l'une quelconque des revendications 10 et 11, le premier dispositif informatique (101) étant adapté pour

- envoyer une requête de placement combinée concernant le sous-groupe (712) de composantes (703) à un dispositif informatique distant (101) ; dans lequel le sous-groupe (712) comprend plus d'une composante (703).

**13.** Premier dispositif informatique (101) selon l'une quelconque des revendications précédentes, dans lequel

- le premier dispositif informatique (101) est positionné dans une première zone topologique (102) ;
- le premier dispositif informatique (101) comprend une liste topologique (602) indiquant une pluralité de dispositifs informatiques de référence positionnés dans une pluralité de zones topologiques (102) autres que la première zone topologique (102), respectivement ;
- le premier dispositif informatique (101) est adapté pour

- déterminer, sur la base de la liste topologique (602), si la troisième composante (703) de l'application (700) doit être placée dans la première zone topologique (102) ou dans une zone parmi la pluralité de zones topologiques (102) autre que la première zone topologique (102) ;

- s'il est déterminé que la troisième composante (703) de l'application doit être placée dans une zone parmi la pluralité de zones topologiques autre que la première zone topologique, transférer la requête de placement de composante au dispositif informatique de référence de la zone topologique respective parmi la pluralité de zones topologiques autre que la première zone topologique ; et
- s'il est déterminé que la troisième composante (703) de l'application doit être placée dans la première zone topologique (102), sélectionner l'au moins un dispositif informatique voisin (101) à partir de la première zone topologique (102).

**14.** Réseau distribué (100), le réseau comprenant

- un premier dispositif informatique (101) selon l'une quelconque des revendications 1 à 13 ;
- un deuxième dispositif informatique (101) selon l'une quelconque des revendications 1 à 13
et
- au moins un dispositif informatique voisin (101) positionné dans un voisinage du premier dispositif informatique (101) selon l'une quelconque des revendications 1 à 13.

**15.** Procédé pour placer une composante (703) d'une application (700) sur un dispositif informatique (101), le procédé comprenant les étapes suivantes

- héberger une première composante (703) d'une application (700) sur un premier dispositif informatique (101) ;
- envoyer des données conformément à une première charge par l'intermédiaire d'une première liaison de communication (401) à une deuxième composante (703) de l'application (700), hébergée sur un deuxième dispositif informatique (101) ;
- recevoir une requête de placement de composante pour une troisième composante (703) de l'application (700) au niveau du premier dispositif informatique (101) ; dans lequel la troisième composante (703) reçoit des données provenant de la première composante (703) conformément à une charge d'entrée ; dans lequel la troisième composante (703) envoie des données à la deuxième composante (703) conformément à une charge de sortie ;
- déterminer s'il faut placer la troisième composante (703) sur le premier dispositif informatique (101) ou s'il faut transférer la requête de placement de composante vers le deuxième dispositif informatique (101) ou vers au moins un dispositif informatique voisin (101) du premier dispositif informatique (101), sur la base de la première charge, de la charge d'entrée, de la charge de sortie et sur la base de fonctions de coût de charge de liaison sur la première liaison de communication (401) et sur au moins une liaison de communication voisine (401) vers l'au moins un dispositif informatique voisin (101).

**Fig. 1**

node B.α.a

**Fig. 2**

| C, D | costs | Local Resource Graph |
|------|-------|-----------------------|
| E, F, G, H | costs | |
| K.β.a | topology | Region |
| P.c | topology | Area |
| T.π.b | topology | Area |

611

600

601

602

602

602

**Fig. 3**

700

Sink —702

Cn —703

● ●

C1

C0

Source —701

Application

Component

**Fig. 4**

**Fig. 5**

**Fig. 6**

**Fig. 7**

(a)

(b)

(c)

(d)

(e)

(f)

**Fig. 8**

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040083475 A

**Non-patent literature cited in the description**

- **ISHFAQ AHMAD.** Multi-View Video: Get Ready for Next-Generation Television. *IEEE Distributed Systems Online,* 2007, vol. 8 (3